# EUROPÄISCHE PATENTSCHRIFT

(11) **EP 4 444 615 B1**
(45) Veröffentlichungstag und Bekanntmachung des Hinweises auf die Patenterteilung: **09.07.2025**
(21) Anmeldenummer: 22835295.1
(22) Anmeldetag: 09.12.2022
(51) Int. Cl.: B64D 1/22

(54) **VORRICHTUNG UND VERFAHREN ZUR AUFNAHME VON WASSER IN EIN FLIEGENDES LUFTFAHRZEUG**
APPARATUS AND METHOD FOR ACCEPTING WATER IN A FLYING AIRCRAFT
DISPOSITIF ET PROCÉDÉ POUR RECEVOIR DE L'EAU DANS UN AÉRONEF EN VOL

(30) Priorität: 09.12.2021 DE 102021132473
(43) Veröffentlichungstag der Anmeldung: 16.10.2024
(73) Patentinhaber: Von Mohos, Zoltán, 50259 Pulheim (DE); Lopez, Javier, 50968 Köln (DE)
(72) Erfinder: Von Mohos, Zoltán, 50259 Pulheim (DE); Lopez, Javier, 50968 Köln (DE)
(74) Vertreter: Geskes, Christoph
(86) Internationale Anmeldenummer: PCT/EP2022/085143
(87) Internationale Veröffentlichungsnummer: WO 2023/105038

(56) Entgegenhaltungen:
- WO-A1-2018/165699
- WO-A2-01/69058
- CN-A- 109 466 687
- CN-A- 110 053 705
- FR-A- 1 481 100
- FR-A- 512 775
- FR-A1- 2 512 775
- GB-A- 2 163 710

## Beschreibung

Die Erfindung betrifft eine Vorrichtung zur Aufnahme von Wasser in ein Luftfahrzeug, ein Einrüstsatz und ein Luftfahrzeug sowie ein Verfahren zur Aufnahme von Wasser in ein Luftfahrzeug.

Aus dem Stand der Technik sind Vorrichtungen und Verfahren zur Aufnahme von Flüssigkeiten in ein Luftfahrzeug bekannt. So offenbart FR 2 512 775 A eine Vorrichtung zum Füllen des Wassertanks eines Flugzeuges während des Fluges. Diese weist einen selbstangetriebenen Torpedo mit einem Schöpfkopf, Quer- und Seitenruder sowie elektrischen Übertragungskabel, Schleppseil und einem Versorgungsschlauch mit Wassertank auf. Der Torpedo kann aus dem Flugzeug gesteuert werden und mittels des Schlauches ist Wasser in den Wassertank füllbar. WO 2018/165699 A1 offenbart eine Vorrichtung zur Aufnahme von Wasser in ein Luftfahrzeug während des Flugs umfassend mindestens einen Eintauchkörper geeignet zum Eintauchen in ein Gewässer mit zumindest einer Wassereinlassöffnung.

Nachteilig am Stand der Technik ist, dass das Auffüllen des Wassertanks im Flugzeug meist lange dauert. Das Luftfahrzeug muss sehr langsam fliegen, um die Vorrichtung abzusenken und durch das Wasser zu ziehen. Weiterhin bremst die in das Wasser abgelassene Vorrichtung das Flugzeug stark ab, beziehungsweise es müssen hohe Energien aufgebracht werden, um die Vorrichtung durch das Wasser zu ziehen. Ein weiterer Nachteil an den aus dem Stand der Technik bekannten Vorrichtungen ist, dass diese nur von wenigen Flugzeugtypen verwendet werden kann, da ein Fliegen relativ nahe der Wasseroberfläche notwendig ist. Tatsächlich hat sich der bekannte Stand der Technik als nicht praktikabel erwiesen, da der selbstangetriebene Torpedo nicht die Geschwindigkeit des Flugzeuges erreicht und somit den Antrieb des Flugzeugs ausreichend entlastet.

Aufgabe der Erfindung ist es eine verbesserte Vorrichtung und ein verbessertes Verfahren zur Aufnahme von Wasser in ein Luftfahrzeug bereit zu stellen. Weiterhin ist es Aufgabe der Erfindung eine Vorrichtung bereitzustellen, mit der schnell Wasser in einen Wassertank in dem Luftfahrzeug geleitet werden kann. Weiterhin ist es Aufgabe der Erfindung eine Vorrichtung und ein Verfahren bereitzustellen, mit dem aus sicherer Höhe ein Luftfahrzeug mit Wasser betankt werden kann. Weiterhin ist es Aufgabe der Erfindung eine Vorrichtung und ein Verfahren zur Verfügung zu stellen, wobei die Vorrichtung mit möglichst geringen Energieeintrag durch ein Gewässer gezogen werden kann und eine möglichst hohe Flugsicherheit zu gewährleisten.

Die Aufgabe wird erfindungsgemäß gelöst mittels einer Vorrichtung zur Aufnahme von Wasser in ein Luftfahrzeug umfassend mindestens einen Eintauchkörper geeignet zum Eintauchen in ein Gewässer mit zumindest einer Wassereinlassöffnung und mit zumindest einem Mittel zur Erzeugung mindestens einer Gasblase zur zumindest teilweisen Umhüllung des Eintauchkörpers.

Weiterhin wird die Aufgabe erfindungsgemäß gelöst mittels eines Verfahren zur Aufnahme von Wasser in ein Luftfahrzeug umfassend die Schritte
- Bereitstellen einer oben benannten Vorrichtung,
- Verbinden der Vorrichtung mit einem Wassertank in einem Luftfahrzeug,
- Absenken der Vorrichtung in ein Gewässer während eines Fluges des Luftfahrzeug, so dass diese zumindest teilweise in das Gewässer eingetaucht wird,
- Aufnahme von Wasser aus dem Gewässer über Wassereinlassöffnungen in einem Eintauchkörper der Vorrichtung.

Weiterhin wird die Aufgabe erfindungsgemäß gelöst mittels einer Verwendung einer oben genannten Vorrichtung zur Beladung eines Luftfahrzeuges mit Wasser.

Weiterhin wird die Aufgabe erfindungsgemäß gelöst mittels eines Einrüstsatzes für ein Luftfahrzeug umfassend eine oben genannte Vorrichtung und zumindest einen Wassertank.

Weiterhin wird die Aufgabe erfindungsgemäß gelöst mittels eines Luftfahrzeugs umfassend eine oben genannte Vorrichtung und zumindest einen Wassertank.

Es wird eine Vorrichtung zur Aufnahme von Wasser in ein Luftfahrzeug, bevorzugt ein Flugzeug, vorgeschlagen. Die Vorrichtung umfasst zumindest einen Eintauchkörper geeignet zum Eintauchen in ein Gewässer mit zumindest einer Wassereinlassöffnung. Weiterhin umfasst der Eintauchkörper zumindest ein Mittel zur Erzeugung mindestens einer Gasblase zur zumindest teilweisen Umhüllung des Eintauchkörpers und/oder zumindest ein Mittel zur Erzeugung eines Gasfilmes zumindest teilweise auf dem Eintauchkörper.

Obwohl Wald- und Flächenbrände in vielen Gebieten der Welt natürlicher Teil der Umweltbedingungen darstellen, stellen sie mehr und mehr eine Bedrohung für Natur und Gesellschaft dar. In den letzten Jahrzehnten hat die globale Erwärmung dazu beigetragen, dass die Häufigkeit und Intensität von Waldbränden zugenommen hat, so dass sie sich auf größere Gebiete ausdehnen und länger andauern. Südeuropa, der Polarkreis, die Amazonas-Region, Australien und die USA sind Beispiele dafür, wie Waldbrände im Jahr 2019 in viel größerem Ausmaß als je zuvor direkt zu menschlichen Opfern, schwerer Luftverschmutzung, Sachschäden, dem Verlust von Wildtieren und Naturgebieten führen. Darüber hinaus sind Waldbrände für etwa 8 Milliarden Tonnen CO₂ pro Jahr verantwortlich, die zu den weltweiten CO₂-Emissionen aus Industrie, Verkehr und Haushalten hinzukommen, sowie für längerfristige Gesundheitsschäden durch das Einatmen von Rauch. Die Verringerung der Auswirkungen von Bränden hat daher enorme Auswirkungen auf unsere Gesellschaft.

Es werden bessere Verfahren und größere Kapazitäten für die Wald- und Flächenbrandbekämpfung benötigt, einschließlich der Brandbekämpfung aus der Luft. Große Waldflächen verfügen über keine Infrastruktur, so dass das Löschen aus der Luft oft die einzige Möglichkeit ist.

Es gibt zwei Kategorien von Löschflugzeugen: amphibische Schöpflader, wie beispielsweise die Canadair CL415, und nicht-amphibische Flugzeuge, die auf Flughäfen Wasser oder Löschmittel nachfüllen müssen. Die CL415 wurde von Bombardier aus der Produktion genommen, und die bestehende Flotte ist überaltert. Nicht-amphibische Flugzeuge sind als Löschflugzeug weniger effektiv, da sie nach jedem Abwurf zu einem Flughafen zurückkehren müssen, um Wasser nachzufüllen, und im Durchschnitt nur einen Abwurf pro Stunde durchführen.

Mit der vorgeschlagenen Vorrichtung sind im Durchschnitt fünf Abwürfe pro Stunde vornehmbar. Dies stellt eine signifikante Steigerung der Brandbekämpfungskapazität aus der Luft dar, wobei gleichzeitig die Kosten der Brandbekämpfung stark reduziert werden. So müssen keine speziellen Löschflugzeuge angeschafft werden, um diese BrandbekämpfungsKapazität zu erreichen.

Flugzeuge und Hubschrauber haben jeweils ihre Stärken und Schwächen, und beide sind komplementär und werden zur Bekämpfung der zunehmenden Waldbrandgefahr benötigt. Die vorliegende Vorrichtung kann sowohl von Hubschraubern als auch von Flugzeugen eingesetzt werden.

Bevorzugt kann ein Einrüstsatz, der insbesondere als palettenbasiertes "Roll-on-Roll-off"-System ausgestaltet ist, mit zumindest einem Wassertank und der Vorrichtung zu Verfügung gestellt werden, der einen Rollenwechsel zwischen einem Transport-Luftfahrzeug und einem Brandbekämpfungs-Luftfahrzeug innerhalb weniger Stunden ermöglicht.

Die Vorrichtung mit einem Wassertank ist bevorzugt als Einrüstsatz problemlos innerhalb von etwa zwei Stunden in heutige und künftige herkömmliche Transportflugzeuge oder Truppentransporter einbaubar. Während des Überfliegens eines Gewässers kann mittels der Vorrichtung Wasser aufgenommen werden. Die Vorrichtung ist bevorzugt als Missionsausrüstung konzipiert und bedarf bevorzugt keiner baulichen Veränderungen des Luftfahrzeuges.

Bevorzugt wird die Vorrichtung mit einem Wassertank verwendet. Der Wassertank umfasst bevorzugt einen Rohrrahmen, in dem ein Schlingertank installiert ist. Mehrere Wassertanks sind bevorzugt koppelbar, dass ein gewünschtes Gesamtwasservolumen, das bevorzugt von dem Luftfahrzeugt tragbar ist, erzielbar ist. Durch diese Bauweise kann die Vorrichtung optimal an die jeweiligen Luftfahrzeuggegebenheiten angepasst werden.

Vorteilhafterweise können, im Gegensatz zu aus dem Stand der Technik bekannten Konzepten, eine Wasseraufnahme bei Wellenhöhen größer 1,5 m erfolgen, insbesondere da der Eintauchkörper nicht nur auf der Wasseroberfläche geführt wird. Beispielsweise ist während des Fluges der Eintauchkörper an einem Schlauch und/oder mittels einer Vorrichtung zur Ausbringung und Einbringung in das Gewässer herablassbar. Das Wasser strömt in den Eintauchkörper durch den Schlauch und befüllt einen Tank des Luftfahrzeugs. Hierzu bedarf es bevorzugt keiner Pumpe, da der Staudruck des Wassers, der durch das Schleppen des Eintauchkörpers durch das Gewässer ausreichend hoch ist, das Wasser in den Wassertank fördert.

Durch die vorgeschlagene Vorrichtung gelingt es vorteilhaft den Wasserwiderstand am Eintauchkörper so zu minimieren, dass die für die Operation zur Verfügung stehende Schubkraft des jeweiligen Luftfahrzeuges, bevorzugt Flugzeuges, ausreicht, um den Eintauchkörper bei einer Operationsgeschwindigkeit von etwa 100 km/h bis etwa 300 km/h, bevorzugt etwa 150 km/h bis etwa 250 km/h, weiter bevorzugt etwa 160 km/h bis etwa 250 km/h durch das Gewässer zu ziehen.

Wird im Rahmen der Erfindung der Begriff "etwa" im Zusammenhang mit Werten oder Wertebereichen oder Richtungsangaben wie "entgegen" verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Bevorzugt umfasst die Vorrichtung einen Schlauch, der weiter bevorzugt am oberen Ende des Eintauchkörpers angeordnet ist. Der Schlauch ist bevorzugt eine kommunizierende Verbindung zwischen dem Eintauchkörper und einem Wassertank, der im Luftfahrzeug angeordnet sein kann.

In einer Ausgestaltung ist vorgesehen, dass der Eintauchkörper einen Schwertabschnitt umfasst. In einer Ausgestaltung ist vorgesehen, dass der Eintauchkörper einen Schwertabschnitt umfasst, wobei der Schwertabschnitt eine Längserstreckung mit einem oberen Ende und einem unteren Ende aufweist. In einer Ausgestaltung ist vorgesehen, dass bevorzugt in einer Abhängigkeit von einem Schwerpunkt der Vorrichtung die Längserstreckung des Schwertabschnittes im bestimmungsgemäßen Gebrauch der Vorrichtung in einem Winkel ungleich 90°, bevorzugt etwa 20° bis etwa 75°, weiter bevorzugt etwa 30° bis etwa 60°, nach in Bewegungsrichtung hinten oder nach vorne geneigt zu einer Horizontalen ausgerichtet ist.

In einer bevorzugten Ausgestaltung ist der Schwertabschnitt in einem Querschnitt stromlinienförmig beziehungsweise strömungsmechanisch optimiert ausgestaltet. Bevorzugt ist der Schwertabschnitt in einem Querschnitt keilförmig oder tropfenförmig ausgestaltet.

In einer bevorzugten Ausgestaltung ist vorgesehen, dass der Eintauchkörper mindestens einen torpedoförmigen Abschnitt umfasst. Bevorzugt umfasst der torpedoförmige Abschnitt einen Torpedokörper. Weiter bevorzugt ist der Torpedokörper ein etwa elliptischer Körper, der weiter bevorzugt etwa mit der Formel (x/(l/2)²+(y/(d/2))^{2,4} = 1 beschrieben werden kann, wobei x und y Raumkoordinaten, I die Länge des Torpedokörpers und d der größte Durchmesser des Torpedokörpers ist.

Bevorzugt ist der torpedoförmige Abschnitt am unteren Ende des Schwertabschnittes angeordnet.

Die Begriffe "unten" und "oben" sind im Sinne der Erfindung im bestimmungsgemäßen Gebrauch der Vorrichtung zu verstehen. Insbesondere sind "oben" und "unten" durch den Gravitationsvektor beim Schleppen der Vorrichtung durch ein Gewässer bestimmt. Weiterhin sind "Bug" und "Heck" der Vorrichtung, bevorzugt des Eintauchkörpers, durch die Bewegungsrichtung definiert, wobei der Bug insbesondere den in Bewegungsrichtung vorderen Teil der Vorrichtung definiert und Heck den in Bewegungsrichtung hinteren Teil der Vorrichtung definiert. Die Bewegungsrichtung ist die Richtung, in die die Vorrichtung durch das Gewässer geschleppt wird. Bevorzugt ist die Bewegungsrichtung die Flugrichtung des Luftfahrzeuges.

Die Vorrichtung umfasst den Eintauchkörper, der bevorzugt zumindest teilweise in das Gewässer eintauchbar beziehungsweise durch dieses schleppbar ist.

Der Eintauchkörper umfasst in einer Ausgestaltung zumindest eine Wasserleitung. Bevorzugt umfasst der Eintauchkörper eine Vielzahl von Wasserleitungen. Vorteilhafterweise kann durch die Anordnung der einen oder mehreren Wasserleitungen der Schwerpunkt der Vorrichtung, weiter bevorzugt des Eintauchkörpers derart beeinflusst werden, dass dieser lagestabil durch das Gewässer schleppbar ist. Bevorzugt umfassen der Schwertabschnitt und/oder der torpedoförmige Abschnitt eine oder mehrere Wasserleitungen. In einer Ausgestaltung ist vorgesehen, dass der Eintauchkörper respektive der Schwertabschnitt und/oder der torpedoförmige Abschnitt in eine Vielzahl von wasserleitenden Kompartiments aufgeteilt ist, wobei bevorzugt jedes wasserleitende Kompartiment eine Wasserleitung ist. In einer Ausgestaltung ist vorgesehen, dass die zumindest eine Wasserleitung zumindest eine Rückstauklappe aufweist. Vorteilhaft wird mittels der Rückstauklappe ein Rückfluss des Wassers verhindert, wenn der Eintauchkörper beispielsweise beim Durchstoßen von Wellentälern zumindest teilweise aus dem Gewässer auftaucht. In einer Ausgestaltung ist vorgesehen, dass die Rückstauklappen öffenbar ausgestaltet sind, um diese beim Einbringen des Eintauchkörpers in das Luftfahrzeug zu öffnen, insbesondere um ein Entleeren beziehungsweise ein Aufrollen des Schlauches zu ermöglichen.

Besonders bevorzugt mündet die zumindest eine Wasserleitung einseitig in die zumindest eine Wassereinlassöffnung. Weiter bevorzugt ist die Wasserleitung kommunizierend mit dem Schlauch verbunden. Besonders bevorzugt umfasst der Eintauchkörper eine Vielzahl von Wassereinlassöffnungen. Weiter bevorzugt umfassen der Schwertabschnitt und/oder der torpedoförmige Abschnitt jeweils zumindest eine, bevorzugt eine Vielzahl von Wassereinlassöffnungen. Die zumindest eine Wassereinlassöffnung ist bevorzugt an einem Bug des Eintauchkörpers angeordnet. Vorteilhafterweise ist die Wassereinlassöffnung derart am Eintauchkörper angeordnet, dass ein Normalvektor der Wassereinlassöffnung in die Bewegungsrichtung gerichtet ist. Die zumindest eine Wassereinlassöffnung kann auch an Flanken des Eintauchkörpers angeordnet sein.

Der Eintauchkörper der erfindungsgemäßen Vorrichtung umfasst Mittel zur Erzeugung mindestens einer Gasblase zur zumindest teilweisen Umhüllung/Bedeckung des Eintauchkörpers und/oder Mittel zur Erzeugung eines Gasfilmes zumindest teilweise auf dem Eintauchkörper. Bevorzugt sind mittels des zumindest einen Mittels zur Erzeugung mindestens einer Gasblase beziehungsweise eines Gasfilms eine oder mehrere Gasblasen erzeugbar, die sich an den Eintauchkörper anlegen oder an diesem vorbeistreichen und diesen dergestalt bedecken. Bevorzugt sind eine Vielzahl von Gasblasen erzeugbar, die sich an den Eintauchkörper anlegen und/oder an diesem vorbeistreichen und so einen Gasfilm bilden und damit den Eintauckörper bedecken. Verbinden sich eine Mehrzahl oder eine Vielzahl von Gasblasen zu einer einzigen Gasblase, umhüllt beziehungsweise bedeckt diese den Eintauchkörper zumindest teilweise. Bevorzugt ist unter einer teilweisen Umhüllung des Eintauchkörpers ein Bedecken zumindest eines Abschnittes des Eintauchkörpers mit einer oder mehreren Gasblasen zu verstehen. Bevorzugt kann bei geringen Schleppgeschwindigkeiten, insbesondere bei einer Schleppgeschwindigkeit unter etwa 35 m/s beziehungsweise einer Schleppgeschwindigkeit, bei der noch keine Superkavitation auftritt, eine Vielzahl von Gasblasen mittels der Mittel zur Erzeugung von mindestens einer Gasblase erzeugt werden, die an dem Eintauchkörper vorbeistreichen oder sich an diesen anlegen und diesen so bedecken. Vorteilhaft ist der Strömungswiderstand des Eintauchkörpers im Gewässer dadurch verringert, dass die Gasblase oder die Gasblasen als Trennmittel zwischen Wasser und Eintauchkörper fungieren. Bei höheren Schleppgeschwindigkeiten, insbesondere bei über etwa 35 m/s, ist mindestens eine Gasblase durch das zumindest eine Mittel zur Erzeugung mindestens einer Gasblase bildbar, wobei die mindestens eine Gasblase bevorzugt den Eintauchkörper von Bug bis Heck umschließt. Bevorzugt umschließt genau eine Gasblase den Eintauchkörper von Bug, weiter bevorzugt ausgehend von dem mindestens einen Mittel zur Erzeugung mindestens einer Gasblase am Bug, bis zum Heck.

In einer Ausgestaltung ist vorgesehen, dass das zumindest eine Mittel zur Erzeugung zumindest einer Gasblase zur zumindest teilweisen Umhüllung des Eintauchkörpers beziehungsweise das zumindest eine Mittel zur Erzeugung eines Gasfilmes zumindest teilweise auf dem Eintauchkörper zumindest eine Luftauslassöffnung umfasst. In einer Ausgestaltung ist vorgesehen, dass der Eintauchkörper zumindest eine Luftauslassöffnung aufweist. Die Luftauslassöffnungen sind mittels einer oder mehrerer Luftleitungen mit der Atmosphäre oder mit einem Druckluftgenerator verbunden.

In einer Ausgestaltung ist vorgesehen, dass zumindest eine Luftauslassöffnung als Venturidüse ausgestaltet ist. Bevorzugt sind eine Vielzahl von Luftauslassöffnungen, weiter bevorzugt alle Luftauslassöffnungen als Venturidüse ausgestaltet. Bevorzugt ist die Luftauslassrichtung, weiter bevorzugt ein Normalvektor der Luftauslassöffnung auf der durch die Luftauslassöffnung definierten Fläche, etwa in Richtung eines Hecks des Eintauchkörpers gerichtet, weiter bevorzugt etwa entgegen die Bewegungsrichtung gerichtet. Vorteilhaft kann auf diese Weise energiesparend bevorzugt atmosphärische Luft bevorzugt ohne Verwendung eines Druckluftgenerators für die Erzeugung mindestens einer Gasblase zumindest teilweise um den Eintauchkörper verwendet werden.

In einer Ausgestaltung ist vorgesehen, dass Lufteinlassöffnungen der Luftleitung der Vorrichtung derart angeordnet sind, dass diese bei bestimmungsgemäßer Verwendung der Vorrichtung oberhalb einer Wasseroberfläche des Gewässers angeordnet sind. Weiter bevorzugt ist vorgesehen, dass die Lufteinlassrichtung, weiter bevorzugt ein Normalvektor der Lufteinlassöffnung auf der durch die Lufteinlassöffnung definierten Fläche, etwa in die Bewegungsrichtung gerichtet ist. Durch diese vorteilhafte Ausgestaltung kann der Staudruck der beim Schleppen die Vorrichtung anströmenden Luft für die Erzeugung mindestens einer Gasblase zumindest teilweise um den Eintauchkörper verwendet werden. In einer Ausgestaltung ist vorgesehen, dass Lufteinlassöffnungen mit Normalvektor in Bewegungsrichtung und mit diesen kommunizierende Luftauslassöffnungen mit Normalvektor entgegen der Bewegungsrichtung, beziehungsweise Venturidüsen an der Vorrichtung angeordnet sind.

In einer Ausgestaltung umfasst der Schwertabschnitt die zumindest eine Luftauslassöffnung. In einer weiteren Ausgestaltung umfasst der torpedoförmige Abschnitt die zumindest eine Luftauslassöffnung. In einer weiteren Ausgestaltung umfasst der Schwertabschnitt und der torpedoförmige Abschnitt Luftauslassöffnungen.

In einer weiteren Ausgestaltung ist vorgesehen, dass die zumindest eine Luftauslassöffnung in einer Bewegungsrichtung der Vorrichtung hinter der zumindest einen Wassereinlassöffnung angeordnet ist. Vorteilhaft kann derart verhindert werden, dass die aus der Luftauslassöffnung strömende Luft durch die Wassereinlassöffnung eingesaugt wird.

In einer weiteren Ausgestaltung ist vorgesehen, dass eine Vielzahl von Wassereinlassöffnungen und Luftauslassöffnungen vorgesehen sind. Bevorzugt sind die Lufteinlassöffnungen und/oder die Luftauslassöffnungen am Bug des Eintauchkörpers angeordnet. In einer Ausgestaltung ist vorgesehen, dass der Eintauchkörper einen Bug umfasst, wobei die zumindest eine Wassereinlassöffnung und die zumindest eine Luftauslassöffnung am Bug angeordnet sind. In einer weiteren Ausgestaltung der Vorrichtung ist vorgesehen, dass eine Vielzahl von Luftauslassöffnungen entlang des Bugs in Längserstreckung der Vorrichtung angeordnet sind. In einer weiteren Ausgestaltung ist vorgesehen, dass zumindest eine, bevorzugt eine Vielzahl von Luftauslassöffnungen an Flanken des Eintauchkörpers, bevorzugt am Schwertabschnitt und/oder am torpedoförmigen Abschnitt, angeordnet sind.

In einer weiteren Ausgestaltung ist vorgesehen, dass der Eintauchkörper respektive der Schwertabschnitt und/oder der torpedoförmige Abschnitt zumindest ein Mittel zur Luftleitung umfasst. In einer Ausgestaltung ist vorgesehen, dass das zumindest eine Mittel zur Luftleitung die Lufteinlassöffnung mit der Luftauslassöffnung verbindet. In einer weiteren Ausgestaltung ist vorgesehen, dass das zumindest eine Mittel zur Luftleitung einen Luftdruckgenerator mit den Luftauslassöffnungen verbindet.

In einer Ausgestaltung ist vorgesehen, dass das zumindest eine Mittel zur Erzeugung mindestens einer Gasblase zur zumindest teilweisen Umhüllung des Eintauchkörpers zumindest einen Kavitator umfasst. In einer Ausgestaltung ist vorgesehen, dass der Eintauchkörper zumindest einen Kavitator umfasst.

Ein Kavitator im Sinne der Erfindung ist ein Mittel, bevorzugt eine geometrische Ausgestaltung der Vorrichtung, weiter bevorzugt des Eintauchkörpers. Insbesondere beim Schleppen der Vorrichtung durch ein Gewässer fällt in Bewegungsrichtung hinter dem Kavitator ein Druck, beispielsweise durch Wirbelbildung, ab. Bevorzugt erzeugt der Kavitator beim Schleppen der Vorrichtung durch das Gewässer eine Kavitation. Weiter bevorzugt ist durch den Kavitator ab einer definierten Geschwindigkeit eine Superkavitation erzeugbar.

Unter Kavitation im Sinne der Erfindung ist zu verstehen, dass hinter dem Kavitator insbesondere durch einen Verdrängungsimpuls der Druck so stark verringert, dass die Flüssigkeit ihrem Phasendiagramm folgend in die Dampfphase übergeht. Kavitation ist dafür bekannt, dass diese zu großen Schäden am kavitierenden Körper führen kann. Anders verhält es sich bei Erreichen einer Superkavitation. Erreicht der Eintauchkörper eine kritische Geschwindigkeit, so entsteht ein über den Teil des Eintauchkörpers, der sich unter der Wasseroberfläche befindet, ein konstanter Druckabfall der wiederum in eine vollständig umhüllenden Kavitationsblase resultiert beziehungsweise in einem Gasfilm zumindest teilweise auf dem Eintauchkörper oder einer Gasblase zumindest teilweise um den Eintauchkörper. Dies tritt bevorzugt bei einer Geschwindigkeit ab etwa 160 km/h beziehungsweise etwa 45 m/s auf. Durch die Geometrie des Kavitators kann beispielsweise eine definierte Geschwindigkeit, bei der die Kavitation auftritt, und/oder eine Stabilität der Kavitationsblase eingestellt werden. In einer Ausgestaltung ist vorgesehen, dass der Kavitator eine, bevorzugt im Querschnitt gesehene, vorne flache beziehungsweise ebene Ausgestaltung aufweist. In einer weiteren Ausgestaltung ist vorgesehen, dass der Kavitator vorne eine, bevorzugt im Querschnitt gesehene, kegelige oder runde Ausgestaltung aufweist. Bevorzugt bildet der Kavitator einen Rücksprung, durch den der Druckabfall erzeugbar ist.

In einer Ausgestaltung umfasst der Eintauchkörper zumindest einen Linienkavitator und/oder einen Punktkavitator. In einer Ausgestaltung ist vorgesehen, dass zumindest ein Kavitator am Schwertabschnitt zumindest als Linienkavitator und/oder zumindest ein Kavitator des torpedoförmigen Abschnitts zumindest als Punktkavitator ausgestaltet ist. In einer Ausgestaltung ist vorgesehen, dass der Schwertabschnitt zumindest einen Linienkavitator und/oder der torpedoförmige Abschnitt einen Punktkavitator umfasst. Ein Linienkavitator kann beispielsweise eine geometrische Anordnung sein, die sich über eine Längserstreckung, insbesondere von oben nach unten, des Eintauchkörpers beziehungsweise des Schwertabschnittes erstreckt. Ein Punktkavitator kann beispielsweise eine rotationssymmetrische Ausgestaltung aufweisen.

In einer Ausgestaltung ist vorgesehen, dass eine Geometrie des zumindest einen Kavitators veränderbar ist. Bevorzugt ist die Geometrie des zumindest einen Kavitators in Abhängigkeit von einer Geschwindigkeit veränderbar, mit der die Vorrichtung beziehungsweise der Eintauchkörper durch das Gewässer geschleppt wird. In einer Ausgestaltung ist vorgesehen, dass eine Anströmfläche des Kavitators zwischen kegelförmig, sphärisch oder pyramidenförmig zu im Wesentlichen eben veränderbar ist. Bevorzugt kann mittels einer Mechanik die Geometrie der Anströmfläche verändert werden, weiter bevorzugt in Abhängigkeit von Sensordaten, die insbesondere eine Geschwindigkeit des Eintauchkörpers im Gewässer wieder geben. Weiter bevorzugt ist die Geometrie der Anströmfläche mittels des Staudruckes, der beim Schleppen des Eintauchkörpers durch das Gewässer vom Wasser aufgebracht wird, veränderbar.

Bevorzugt ist der zumindest eine Kavitator in Bewegungsrichtung hinter dem zumindest einen Wassereinlass angeordnet. In einer Ausgestaltung ist der zumindest eine Luftauslass in Bewegungsrichtung hinter dem Kavitator angeordnet. Dies kann vorteilhaft für eine ventilierte Kavitation, bevorzugt eine ventilierte Superkavitation, verwendet werden. Bei einer ventilierten Kavitation ist in die Kavitationsblase ein Gas beziehungsweise Luft einbringbar, beziehungsweise ist die Kavitationsblase induzierbar durch aus den Luftauslassöffnungen ausströmendes Gas beziehungsweise Luft. Bevorzugt wird durch die ventilierte Kavitation eine Gasblase zumindest teilweise um den Eintauchkörper oder ein Gasfilm zumindest teilweise auf dem Eintauchkörper erzeugt. Weiterhin vorteilhaft kann mittels ventilierter Kavitation der Eintauchkörper in eine vergleichbare Gasblase, wie bei einer nicht ventilierten Superkavitation insbesondere bei höherer Fluggeschwindigkeit erzeugt werden.

Je nach geometrischer Ausgestaltung des Eintauchkörpers kann eine Superkavitation beispielsweise bereits ab einer Fluggeschwindigkeit von etwa 45 m/s bis etwa 60 m/s erfolgen. Der Eintauchkörper wird dabei zumindest teilweise in eine Superkavitationsblase gehüllt, wobei die vom Luftfahrzeug aufgebrachte Leistung zum Schleppen der Vorrichtung in einigen Ausgestaltungen des Eintauchkörpers durch die Superkavitation nicht wesentlich verringert wird. In einer Ausgestaltung ist bei höheren Geschwindigkeiten, beispielsweise etwa 90 m/s, die Leistung, die zur Überwindung des Reibungswiderstandes des zumindest teilweise in das Gewässer eingetauchten Eintauchkörpers geringer als bei einer Fluggeschwindigkeit von etwa 45 m/s bis etwa 60 m/s. Die Widerstandskraft erhöht sich jedoch trotzdem mit zunehmender Geschwindigkeit, aufgrund des erhöhten Staudrucks. Mit der ventilierten Kavitation kann hingegen vorteilhaft auch bei geringeren Fluggeschwindigkeiten, beispielsweise etwa 25 m/s bis etwa 80 m/s, bevorzugt etwa 35 m/s bis etwa 80 m/s, weiter bevorzugt etwa 45 m/s bis etwa 80 m/s, weiter bevorzugt etwa 60 m/s bis etwa 80 m/s ein Widerstandsbeiwert gegenüber einer nicht ventilierten Superkavitation deutlich reduziert werden.

In einer Ausgestaltung ist die Luftmenge, die in die Kavitationsblase eingebracht ist, nach Erreichen einer stabilen Kavitationsblase reduzierbar oder vollständig unterbindbar. Die Kavitationsblase kann, einmal erzeugt, in einer Ausgestaltung auch ohne weitere Luftzufuhr bestehen bleiben. In einer Ausgestaltung ist vorgesehen, dass mittels Ventilen in der Luftleitung die Zufuhr von Luft regelbar oder steuerbar ist. Insbesondere ist die Luftzufuhr in Abhängigkeit von der Fluggeschwindigkeit steuerbar. In einer weiteren Ausgestaltung ist die Luftzufuhr derart gesteuert, dass bei einer Fluggeschwindigkeit von etwa 45 m/s bis etwa 90 m/s, bevorzugt etwa 60 m/s bis etwa 80 m/s Luft in die Kavitationsblase eingeblasen wird. Bevorzugt wird eine Luftmenge in Abhängigkeit von der Fluggeschwindigkeit gesteuert. In einer weiteren Ausgestaltung ist vorgesehen, dass bei einer Fluggeschwindigkeit von etwa 80 m/s bis etwa 90 m/s, bevorzugt bei etwa 85 m/s bis etwa 90 m/s, weiter bevorzugt ab etwa 90 m/s die Luftzufuhr unterbunden wird.

In einer weiteren Ausgestaltung ist vorgesehen, dass die Luftmenge für die ventilierte Kavitation mit zunehmender Fluggeschwindigkeit erhöht wird.

In einer Ausgestaltung ist vorgesehen, dass der Eintauchkörper Flugstabilisatoren aufweist. Insbesondere sind die Flugstabilisatoren als Tragflächen ausgestaltet. Insbesondere bleibt der Eintauchkörper während eines Herablassens aus dem Luftfahrzeug in ein Gewässer mittels der Flugstabilisatoren in der Luft lagestabil. Vorteilhafterweise ist durch die Flugstabilisatoren ein sicheres Eintauchen des Eintauchkörpers in das Gewässer gewährleistbar. Die Flugstabilisatoren sind bevorzugt am Schwertkörper angebracht. In einer Ausgestaltung sind die Flugstabilisatoren am Torpedokörper angebracht. Bevorzugt sind die Flugstabilisatoren an einem Teil der Vorrichtung angebracht, der bei bestimmungsgemäßen Gebrauch nicht in das Gewässer eintaucht. Bevorzugt sind die Flugstabilisatoren ausklappbar und einklappbar. Vorteilhafterweise werden die Flugstabilisatoren eingeklappt, wenn die Vorrichtung in das Luftfahrzeugt eingeholt wird.

In einer Ausgestaltung ist vorgesehen, dass der Eintauchkörper zumindest ein Pendelruder, bevorzugt ein Pendelruder je Seite, weiter bevorzugt etwa zwei Pendelruder je Seite umfasst. Bevorzugt ist das zumindest eine Pendelruder am torpedoförmigen Abschnitt angeordnet. In einer weiteren Ausgestaltung ist zumindest ein Pendelruder am Schwertabschnitt angeordnet. In einer weiteren Ausgestaltung ist das Pendelruder einklappbar und ausklappbar und/oder einfahrbar oder ausfahrbar. Bevorzugt ist das Pendelruder in den torpedoförmigen Abschnitt einfahrbar. Vorteilhafterweise kann das Pendelruder beim Ablassen beziehungsweise beim Eintauchen in das Gewässer eingefahren sein, so dass dieses beim Eintauchen nicht beschädigt wird. Bevorzugt ist mittels des Pendelruders eine Eintauchtiefe des Eintauchkörpers im Gewässer steuerbar oder regelbar.

In einer Ausgestaltung ist vorgesehen, dass an dem Eintauchkörper mindestens ein Eintauchsporn angeordnet ist. Mittels des Eintauchsporns ist ein definiertes Eintauchen des Eintauchkörpers in das Gewässer gewährleistet. Der Eintauchsporn kann die Form einer Finne oder eine Torpedoform aufweisen und/oder umfasst bevorzugt ein Pendelruder. Insbesondere ist der Eintauchsporn unterhalb des Eintauchkörpers angeordnet. Weiter bevorzugt kann der Eintauchsporn in den Eintauchkörper zumindest teilweise eingefahren werden. Weiter bevorzugt ist eine Ausfahrlänge des Eintauchsporns steuerbar. Insbesondere ist der Eintauchsporn nach dem Eintauchen des Eintauchkörpers in diesen einfahrbar oder ein Abstand zum Eintauchkörper verringerbar. Bevorzugt ist der Eintauchsporn unterhalb des torpedoförmigen Abschnittes angeordnet.

In einer Ausgestaltung der Vorrichtung ist vorgesehen, dass diese einen Airbag zur Vermeidung von Schäden oder Verlust der Vorrichtung bei einer Kollision mit Objekten im Gewässer umfasst. Vorteilhafterweise geht der Airbag auf, wenn die Vorrichtung mit einem Objekt im Gewässer, beispielsweise Treibgut, kollidiert oder eine Kollision droht. Dies kann Schäden an der Vorrichtung als auch am Objekt vermeiden oder zumindest reduzieren. In einer weiteren Ausgestaltung ist vorgesehen, dass die Vorrichtung mindestens eine Sollbruchstelle oder Sollrissstelle aufweist, so dass bei einer Kollision mit einem Objekt im Gewässer die Vorrichtung vom Luftfahrzeug definiert abgerissen wird, um insbesondere das Luftfahrzeug nicht zu gefährden. In einer weiteren Ausgestaltung ist vorgesehen, dass die Vorrichtung schwimmbar ausgestaltet ist. In einer weiteren Ausgestaltung ist vorgesehen, dass im Falle einer Havarie der Vorrichtung ein Auftriebskörper bevorzugt automaisch aufblasbar ist. Vorteilhafterweise kann die Vorrichtung im Falle einer Havarie aus dem Gewässer geborgen werden, um diese gegebenenfalls nach einer Reparatur wieder zu verwenden.

Eine beispielhafte Vorrichtung zur Aufnahme von Flüssigkeiten aus einem Gewässer umfasst einen Eintauchkörper mit einem Schwertabschnitt und eine torpedoförmigen Abschnitt. Der Schwertabschnitt ist beispielsweise in einem Querschnitt stromlinienförmig geformt, beispielsweise im Querschnitt tropfenförmig. Vorzugsweise ist der Schwertabschnitt an einem Bug dicker ausgestaltet als einem Heck. Mittels einer oder mehrerer Wassereinlassöffnungen, die am Bug des Eintauchkörpers angeordnet sind, wird Wasser in beispielsweise drei Kompartiments innerhalb des Eintauchkörpers geleitet und durch den Schlauch am oberen Ende der Vorrichtung mit einem Durchmesser von etwa 0,15 m in einen Wassertank in einem Flugzeug gedrückt. Hierdurch kann vorteilhafterweise bei einer Fluggeschwindigkeit von etwa 115 kn beziehungsweise etwa 60 m/s und einer Flughöhe von etwa 30 m über der Gewässeroberfläche etwa 10 t Wasser in etwa 30 Sekunden in den Wassertank im Luftfahrzeug befördert werden.

Der Schwertabschnitt umfasst beispielhaft eine Wassereinlassöffnung, die sich entlang der Längserstreckung des Schwertabschnittes am Bug erstreckt. Bevorzugt ist die Wassereinlassöffnung ausschließlich in einem Bereich des Schwertabschnittes angeordnet, der sich im bestimmungsgemäßen Gebrauch der Vorrichtung unterhalb der Wasseroberfläche befindet. Beispielhaft sind beidseitig der Wassereinlassöffnung am Bug je ein Linienkavitator vorgesehen, der sich von oben nach unten entlang der Längserstreckung des Schwertabschnittes erstreckt. Wird die Vorrichtung mit einer Geschwindigkeit von etwa 60 m/s oder mehr durch das Gewässergeschleppt, entsteht eine Superkavitationsblase, die den Eintauchkörper zumindest teilweise umhüllt. Diese verringert den Strömungswiderstandskoeffizient der Vorrichtung im Vergleich zu einer Vorrichtung, die nicht superkavitiert. Hierdurch wird der Energieaufwand beim Schleppten der Vorrichtung durch das Gewässer signifikant reduziert. Insbesondere macht eine derart erreichte Verringerung des Strömungswiderstandes ein Schleppen der Vorrichtung durch das Gewässer mit einer Geschwindigkeit ab etwa 60 m/s erst möglich.

Die Vorrichtung weist beispielhaft Luftauslassöffnungen auf, mit der Luft entgegen der Bewegungsrichtung der Vorrichtung ausblasbar ist. Beispielhaft sind die Luftauslassöffnungen in Bewegungsrichtung hinter dem Linienkavitator angeordnet. Für einen schnellen Aufbau der Superkavitationsblase und deren Stabilisierung wird durch Luftauslassöffnungen Luft entgegen der Bewegungsrichtung geblasen. Sollte beispielsweise die Geschwindigkeit des Luftfahrzeuges nicht ausreichen, um direkt beim Eintauchen zumindest teilweise eine Superkavitationsblase um den Eintauchkörper zu bilden, kann mittels der aus den Luftauslassöffnungen geblasenen Luft ebenfalls eine Gasblase zumindest teilweise um den Eintauchkörper oder ein Gasfilm zumindest teilweise auf dem Eintauchkörper gebildet werden, der den Strömungswiderstand reduziert.

Der torpedoförmige Abschnitt, der beispielhaft am unteren Ende des Schwertabschnittes angeordnet ist, umfasst einen torpedoförmigen Körper mit einem bugseitig angeordneten Punktkavitator, der bevorzugt rotationssymmetrisch ausgestaltet ist. Beispielhaft sind in Bewegungsrichtung hinter dem Punktkavitator ebenfalls Luftauslassöffnungen angeordnet, mittels denen Luft entgegen der Bewegungsrichtung ausblasbar ist. In Bewegungsrichtung vor dem Punktkavitator ist beispielhaft eine Wassereinlassöffnung vorgesehen, die mit den Kompartiments in Verbindung steht.

Mittels zweier Pendelruder je Seite am torpedoförmigen Abschnitt kann die Eintauchtiefe des Eintauchkörpers gesteuert oder geregelt werden.

In einer Ausgestaltung ist vorgesehen, dass die Vorrichtung eine Abstandsmessvorrichtung umfasst, mittels der zumindest eine Eintauchtiefe des Eintauchkörpers in das Gewässer und/oder eine Wellenhöhe des Gewässers ermittelbar ist. Bevorzugt umfasst die Abstandsmessvorrichtung beispielsweise ein Radar-Gerät, Lidar-Gerät und/oder ein Luftdruckmessgerät. In weiteren Ausgestaltung umfasst die Abstandsmessvorrichtung einen Drucksensor zur Ermittlung eines Wasserdruckes am Eintauchkörper und/oder am Eintauchsporn. Bevorzugt tastet die Abstandsmessvorrichtung die Wasseroberfläche in Bewegungsrichtung ab. Weiter bevorzugt wird mittels der von der Abstandsmessvorrichtung ermittelten Daten die Pendelruder des Eintauchkörpers angesteuert. Vorteilhafterweise kann mittels der Abstandsmessvorrichtung je nach Wellenhöhe bevorzugt dynamisch angepasst auf wechselnde Bedingungen die Eintauchtiefe des Eintauchkörpers geregelt werden.

Weiterhin ist bevorzugt unterhalb des torpedoförmigen Abschnittes ein Eintauchsporn angeordnet. Der Eintauchsporn unterstützt den Eintauchkörper beim Eintauchen in das Gewässer. Vorteilhaft ist der Eintauchsporn in den Eintauchkörper einfahrbar oder teleskopierbar. Bevorzugt umfasst der Eintauchsporn zumindest ein Pendelruder.

Weiterhin wird ein Verfahren zur Aufnahme von Wasser in ein Luftfahrzeuges vorgeschlagen umfassend die Schritte
- Bereitstellen einer oben beschriebenen Vorrichtung,
- Verbinden der Vorrichtung mit einem Wassertank in einem Luftfahrzeug,
- Absenken der Vorrichtung in ein Gewässer während eines Fluges des Luftfahrzeugs, so dass diese zumindest teilweise in das Gewässer eingetaucht wird,
- Aufnahme von Wasser aus dem Gewässer über Wassereinlassöffnungen in einem Eintauchkörper der Vorrichtung.

In einer Ausgestaltung ist vorgesehen, dass die Vorrichtung mit einer Vorrichtung zur Ausbringung und Einbringung zum Absenken aus dem Luftfahrzeug und Einholen nach einem Befüllen des Wassertanks verbunden wird.

In einer Ausgestaltung ist vorgesehen, dass mittels zumindest einem Mittel zur Erzeugung mindestens einer Gasblase, das bevorzugt wie weiter oben beschrieben ausgeführt ist, eine Gasblase zumindest teilweise um den Eintauchkörper erzeugt wird.

In einer Ausgestaltung ist vorgesehen, dass die Vorrichtung mit Luft beaufschlagt wird, so dass diese derart aus den Luftauslassöffnungen strömt, insbesondere so dass der in das Gewässer eingetauchte Eintauchkörper der Vorrichtung zumindest teilweise von Luft umhüllt ist. In einer Ausgestaltung ist vorgesehen, dass die Vorrichtung derart von dem Luftfahrzeug geschleppt wird, dass mittels Staudruck an den Lufteinströmöffnungen Luft aus den Luftausströmöffnungen, die mit den Lufteinströmöffnungen kommunizierend verbunden sind, geblasen wird, insbesondere so dass der ins Gewässer eingetauchte Eintauchkörper zumindest teilweise von Luft umhüllt ist. In einer Ausgestaltung ist vorgesehen, dass Luft aus Luftauslassöffnungen mittels eines Venturieffekts gesogen wird, insbesondere so dass der ins Gewässer eingetauchte Eintauchkörper zumindest teilweise von Luft umhüllt ist. In einer weiteren Ausgestaltung wird sowohl der Staudruck als auch der Venturieffekt genutzt, um Luft aus den Luftauslassöffnungen zu blasen.

In einer Ausgestaltung ist vorgesehen, dass der Eintauchkörper so schnell durch das Gewässer gezogen wird, dass eine Kavitation, bevorzugt eine Superkavitation, am Eintauchkörper induziert wird. In einer Ausgestaltung ist vorgesehen, dass mittels zumindest eines Kavitators eine Superkavitation an dem ins Gewässer eingetauchten Eintauchkörper induziert wird. Der Eintauchkörper wird bevorzugt zumindest teilweise in eine Superkavitationsblase eingehüllt.

In einer Ausgestaltung ist vorgesehen, dass mittels Luft eine ventilierte Kavitation induziert wird. Bevorzugt wird Luft in eine entstehende oder bestehende Kavitationsblase eingeblasen. Weiter bevorzugt wird Luft durch zumindest eine Luftauslassöffnung etwa in Richtung eines Hecks des Eintauchkörpers gerichtet ausgeblasen. Weiter bevorzugt wird Luft durch zumindest eine Luftauslassöffnung etwa in Richtung der Bewegungsrichtung des Eintauchkörpers gerichtet ausgeblasen. Weiter bevorzugt wird Luft durch zumindest eine Luftauslassöffnung senkrecht zur Bewegungsrichtung ausgeblasen, beispielsweise an Flanken des Eintauchkörpers. Weiter bevorzugt wird mittels Luft aus der zumindest einen Luftauslassöffnung die Kavitationsblase stabilisiert.

In einer Ausgestaltung ist vorgesehen, dass bei einem Eintauchvorgang des Eintauchkörpers im Wesentlichen zuerst der ausgefahrene Eintauchsporn eingetaucht wird. Der Eintauchsporn wird bevorzugt beim Ablassen der Vorrichtung in das Gewässer zuerst in das Wasser eingetaucht. Das Pendelruder kann mit einem geringen Anstellwinkel, bevorzugt von etwa 0,5° bis etwa 10°, bevorzugt etwa 2° bis etwa 5°, eingestellt werden, so dass die Vorrichtung in das Gewässer gezogen wird. Durch den geringen Anstellwinkel des Pendelruders wird beim Eintauchen des Eintauchkörpers kein oder nur ein geringes Moment, insbesondere kein Nickmoment, auf den Eintauchkörper aufgebracht. Der Eintauchkörper kann somit im Wesentlichen ohne ein Verkippen in das Gewässer eingetaucht werden. Bevorzugt wird durch das im Wesentlichen parallele Eintauchen des Eintauchkörpers der Schlauch am Eintauchkörper nicht geknickt und weiter bevorzugt keine plötzliche Kraft beziehungsweise kein vom Piloten unvorhersehbarer Kraftvektor auf das Luftfahrzeug aufgebracht. Bevorzugt wird der Eintauchsporn auch zum Ausbringen des Eintauchkörpers aus dem Gewässer verwendet. Das Pendelruder des Eintauchspornes kann derart eingestellt werden, dass der Eintauchkörper aus dem Gewässer auftaucht. Bevorzugt kann das Auftauchen mittels der Pendelruder am Eintauchkörper erfolgen, weiter bevorzugt zumindest solange, bis die Pendelruder des Eintauchkörpers knapp unter der Wasseroberfläche sind. Ein weiteres Auftauchen kann in einer Ausgestaltung dann mittels des Eintauchspornes erfolgen. In einer weiteren Ausgestaltung ist der Eintauchkörper dann weit genug aus dem Wasser aufgetaucht, dass dieser zum Luftfahrzeug hochgezogen beziehungsweise in das Luftfahrzeug eingeholt werden kann. Danach kann der Eintauchkörper in des Luftfahrzeug eingeholt werden. Bevorzugt wird der Eintauchsporn nach dem Eintauchen des Eintauchkörpers in den Eintauchkörper eingefahren. In einer weiteren Ausgestaltung wird der Eintauchsporn vor dem Einholen der Vorrichtung in das Luftfahrzeug in den Eintauchkörper eingefahren.

Weiterhin vorteilhaft an der Verwendung des Eintauchspornes zum Eintauchen und weiter bevorzugt zum Auftauchen des Eintauchkörpers ist, dass der Eintauchkörper beim Eintauchen und/oder Auftauchen kein Nickmoment erfährt. Mit dem Eintritt des Eintauchkörpers in das Gewässer wird bevorzugt in weniger als einer Sekunde eine Gasblase um den eingetauchten Abschnitt des Eintauchkörper gebildet. Eine insbesondere plötzliche Richtungsänderung oder Lageänderung des Eintauchkörpers, wie beispielsweise bei einem Nicken, kann zu einer Störung der Gasblase und gegebenenfalls zu einem Abriss der Gasblase führen. Dies würde schlagartig die Widerstandskraft auf den Eintauchkörper erhöhen, die entweder auf das Luftfahrzeug ausgeübt wird oder zu einem Abriss des Eintauchkörpers von der Vorrichtung führt. Weiterhin sind durch eine Störung der Gasblase Schäden durch Kavitation an dem Eintauchkörper zu erwarten.

In einer Ausgestaltung ist vorgesehen, dass vor dem zumindest teilweisen Eintauchen des Eintauchkörpers dieser in einer Flugphase mittels der ausgeklappten Flugstabilisatoren stabilisiert wird. Bevorzugt werden die Flugstabilisatoren beim Absenken der Vorrichtung vom Luftfahrzeug ausgeklappt und vor dem Einholen in das Luftfahrzeug eingeklappt.

In einer Ausgestaltung ist vorgesehen, dass nach dem zumindest teilweisen Eintauchen des Eintauchkörpers zumindest ein Pendelruder in eine Einsatzstellung gebracht wird. Bevorzugt wird mittels des Pendelruders eine Lage des Eintauchkörpers im Gewässer geregelt oder stabilisiert.

Weiterhin wird eine Verwendung der oben genannten Vorrichtung zur Beladung eines Luftfahrzeuges mit Wasser vorgeschlagen. Beispielsweise kann die Vorrichtung verwendet werden, um ein Luftfahrzeug mit Löschwasser zu beladen. Weiterhin kann die Vorrichtung verwendet werden, um Öl oder andere Verunreinigungen aus einem Gewässer abzuschöpfen. Weiterhin kann die Vorrichtung verwendet werden, um beispielsweise kontaminiertes Wasser aufzunehmen.

Es wird ein Einrüstsatz für ein Luftfahrzeug umfassend eine oben genannte Vorrichtung und zumindest einen Wassertank vorgeschlagen. In einer Ausgestaltung ist vorgesehen, dass der Wassertank als Schlingertank ausgestaltet ist.

In einer Ausgestaltung umfasst der Einrüstsatz eine Vorrichtung zur Ausbringung und Einbringung, um die Vorrichtung aus dem Luftfahrzeug in ein Gewässer abzulassen und wieder in das Luftfahrzeug hochzuziehen.

Es wird ferner ein Luftfahrzeug vorgeschlagen umfassend eine oben genannte Vorrichtung und zumindest einen Wassertank. In einer Ausgestaltung umfasst das Luftfahrzeug einen oben genannten Einrüstsatz. In einer Ausgestaltung ist vorgesehen, dass das Luftfahrzeug eine ausfahrbare und/oder teleskopierbare Vorrichtung zur Ausbringung und Einbringung zumindest eines Eintauchkörpers der Vorrichtung während des Fluges des Luftfahrzeug umfasst.

Weitere vorteilhafte Ausgestaltungen gehen aus der nachfolgenden Zeichnung hervor. Die dort dargestellte Weiterbildung ist jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf das in der Figur gezeigte Ausführungsbeispiel verweisen. Es zeigt:

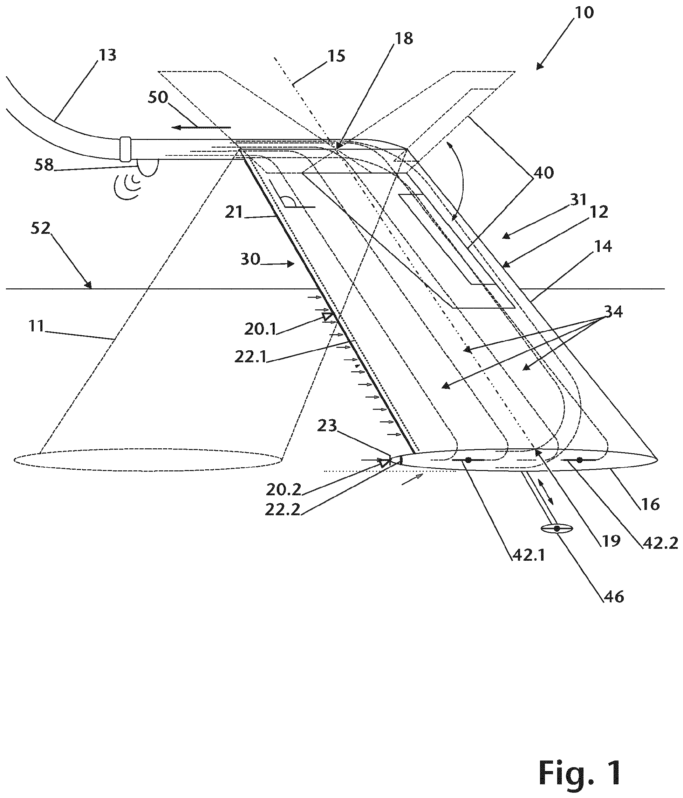

- Fig. 1: eine Vorrichtung zur Aufnahme von Flüssigkeiten aus einem Gewässer.

Fig. 1 zeigt eine Vorrichtung 10 zur Aufnahme von Flüssigkeiten aus einem Gewässer 52. Die Vorrichtung 10 umfasst einen Eintauchkörper 12 mit einem Schwertabschnitt 14 und einem torpedoförmigen Abschnitt 16. Der Schwertabschnitt 14 ist in einem nicht dargestellten Querschnitt stromlinienförmig geformt, beispielsweise im Querschnitt tropfenförmig. Vorzugsweise ist der Schwertabschnitt an einem Bug 30 dicker ausgestaltet als an einem Heck 31. Mittels einer oder mehrerer Wassereinlassöffnungen 20.1, die am Bug 30 angeordnet sind wird Wasser in Kompartiments 34 innerhalb des Eintauchkörpers 12 geleitet und durch den Schlauch 13 mit einem Durchmesser von etwa 0,15 m in einen nicht dargestellten Wassertank in einem Luftfahrzeug gedrückt. Hierdurch kann vorteilhafterweise bei einer Fluggeschwindigkeit von etwa 115 kn beziehungsweise etwa 60 m/s und einer Flughöhe von etwa 30 m etwa 10 t Wasser in etwa 30 Sekunden in den Wassertank im Luftfahrzeug befördert werden.

Der Schwertabschnitt umfasst weiterhin beidseitig von der Wassereinlassöffnung 20.1 am Bug 30 je einen Linienkavitator, der sich von oben nach unten entlang der Längserstreckung 15 der Vorrichtung 10 erstreckt. Wird die Vorrichtung mit einer Geschwindigkeit von etwa 60 m/s oder mehr durch das Gewässer gezogen, entsteht eine Superkavitationsblase, die den Eintauchkörper 12 zumindest teilweise umhüllt. Diese verringert den Strömungswiderstandskoeffizient im Vergleich zu einer Vorrichtung, die nicht superkavitiert. Hierdurch wird der Energieaufwand beim Schleppten der Vorrichtung 10 durch das Gewässer 52 signifikant reduziert. Insbesondere macht eine derart erreichte Verringerung des Strömungswiderstandes ein Schleppen der Vorrichtung 10 durch das Gewässer 52 mit einer Geschwindigkeit von etwa 60 m/s erst möglich.

Für einen schnellen Aufbau der Superkavitationsblase und deren Stabilisierung wird durch Luftauslassöffnungen 22.1 Luft entgegen der Bewegungsrichtung 50 geblasen. Sollte beispielsweise die Geschwindigkeit des Luftfahrzeuges nicht ausreichen, um direkt beim Eintauchen zumindest teilweise eine Superkavitationsblase um den Eintauchkörper 12 zu bilden, kann mittels der aus den Luftauslassöffnungen 22.1 geblasenen Luft ebenfalls eine Gasblase zumindest teilweise um den Eintauchkörper 12 gebildet werden, der den Strömungswiderstand reduziert. Ebenfalls kann bei einer Fluggeschwindigkeit von etwa 35 m/s bis etwa 90 m/s eine ventilierte Kavitation erfolgen, die eine Gasblase um dem Eintauchkörper erzeugt.

Der torpedoförmige Abschnitt 16, der am unteren Ende 19 des Schwertabschnittes 14 angeordnet ist, umfasst einen torpedoförmigen Körper mit einem bugseitig angeordneten Punktkavitator, der rotationssymmetrisch ausgestaltet ist. In Bewegungsrichtung 50 hinter dem Punktkavitator 23 sind ebenfalls Luftauslassöffnungen 22.2 angeordnet, mittels denen Luft entgegen der Bewegungsrichtung ausblasbar ist. In Bewegungsrichtung vor dem Punktkavitator 23 ist eine Wassereinlassöffnung 20.2 vorgesehen, die mit den Kompartiments 34 in Verbindung steht.

Mittels zweier Pendelruder 42.1 und 42.2 am torpedoförmigen Abschnitt 16 kann die Eintauchtiefe des Eintauchkörpers 12 gesteuert oder geregelt werden. Eine Abstandsmessvorrichtung 58 ist an der Vorrichtung 10 vorgesehen, die beispielsweise als Radar ausgestaltet ist. Diese ermittelt eine Eintauchtiefe des Eintauchkörpers 12 und bestimmt den Wellengang, der in Bewegungsrichtung vor dem Eintauchkörper 12 vorhanden ist. Mittels der gewonnenen Daten werden die Pendelruder 42.1 und 42.2 angesteuert, um den Eintauchkörper 12 in einer für die Flüssigkeitsaufnahme und Flugsicherheit optimalen Eintauchtiefe zu halten.

Weiterhin ist unterhalb des torpedoförmigen Abschnittes 16 ein Eintauchsporn 46 angeordnet. Der Eintauchsporn 46 unterstützt den Eintauchkörper 12 beim Eintauchen in das Gewässer 52.

Fig. 1 deutet eine alternative Ausgestaltung 11 der Vorrichtung 10 mit gestrichelten Linien an, die im bestimmungsgemäßen Gebrauch in einem anderen Winkel zu einer Horizontalen durch das Gewässer 52 schleppbar ist. Insbesondere unterscheidet sich ein Schwerpunkt der alternativen Ausgestaltung 11 von der Vorrichtung 10, die mit durchgezogenen Linien gezeichnet ist.

Mit der Vorgeschlagenen Vorrichtung 10 sowie dem Verfahren zur Aufnahme von Flüssigkeiten in ein Luftfahrzeuge und dem vorgeschlagenen Einrüstsatz kann eine Brandbekämpfung aus der Luft effektiv auch von Transport-Luftfahrzeugen durchgeführt werden. Auch ein vorgeschlagenes Luftfahrzeug, dass bevorzugt bei der Erstausrüstung bereits die Vorrichtung umfasst, kann durch die mögliche hohe Fluggeschwindigkeit bei der Wasseraufnahme eine effektive Brandbekämpfung vornehmen. Auf Grund der hohen Fluggeschwindigkeit des vorgesehene Luftfahrzeuges wird der Aktionsradius deutlich vergrößert.

## Patentansprüche

1. Vorrichtung (10) zur Aufnahme von Wasser in ein Luftfahrzeug während des Flugs umfassend mindestens einen Eintauchkörper (12) geeignet zum Eintauchen in ein Gewässer mit zumindest einer Wassereinlassöffnung (20.1, 20.2) und mit zumindest einem Mittel zur Erzeugung mindestens einer Gasblase (21, 22, 23) zur zumindest teilweisen Umhüllung des Eintauchkörpers (12).

2. Vorrichtung (10) gemäß Anspruch 1, **dadurch gekennzeichnet, dass** das zumindest eine Mittel zur Erzeugung einer Gasblase auf dem Eintauchkörper (12) zumindest eine Luftauslassöffnung (22.1, 22.2) umfasst.

3. Vorrichtung (10) gemäß einem oder mehreren der vorhergehenden Ansprüche, **dadurch gekennzeichnet, dass** der Eintauchkörper (12) einen Schwertabschnitt (14) umfasst, wobei der Schwertabschnitt (14) eine Längserstreckung (15) mit einem oberen Ende (18) und einem unteren Ende (19) aufweist.

4. Vorrichtung (10) gemäß einem oder mehreren der vorhergehenden Ansprüche, **dadurch gekennzeichnet, dass** der Eintauchkörper (12) mindestens einen torpedoförmigen Abschnitt (16) umfasst.

5. Vorrichtung (10) gemäß einem oder mehreren der Ansprüche 2 bis 4, **dadurch gekennzeichnet, dass** die zumindest eine Luftauslassöffnung (22.1, 22.2) in einer Bewegungsrichtung (50) der Vorrichtung (10) hinter der zumindest einen Wassereinlassöffnung (20.1, 20.2) angeordnet ist.

6. Vorrichtung (10) gemäß einem oder mehreren der Ansprüche 2 bis 5, **dadurch gekennzeichnet, dass** eine Vielzahl von Wassereinlassöffnungen (20.1, 20.2) und Luftauslassöffnungen (22.1, 22.2) vorgesehen sind.

7. Vorrichtung (10) gemäß einem oder mehreren der Ansprüche 2 bis 6, **dadurch gekennzeichnet, dass** der Eintauchkörper (12) einen Bug (30) umfasst, wobei die zumindest eine Wassereinlassöffnung (20.1, 20.2) und die zumindest eine Luftauslassöffnung (22.1, 22.2) am Bug (30) angeordnet sind.

8. Vorrichtung (10) gemäß Anspruch 7, **dadurch gekennzeichnet, dass** eine Vielzahl von Luftauslassöffnungen (22.1, 22.2) entlang des Bugs (30) in Längserstreckung (15) der Vorrichtung (10) angeordnet sind.

9. Vorrichtung (10) gemäß einem oder mehreren der Ansprüche 2 bis 8, **dadurch gekennzeichnet, dass** zumindest eine Luftauslassöffnung (22.1, 22.2) als Venturidüse ausgestaltet ist.

10. Vorrichtung (10) gemäß einem oder mehreren der vorhergehenden Ansprüche, **dadurch gekennzeichnet, dass** das zumindest eine Mittel zur Erzeugung einer Gasblase zumindest teilweise um den Eintauchkörper (12) zumindest einen Kavitator (21, 23) umfasst.

11. Vorrichtung (10) gemäß Anspruch 10, **dadurch gekennzeichnet, dass** zumindest ein Kavitator (21) am Schwertabschnitt (14) als Linienkavitator und/oder zumindest ein Kavitator (23) des torpedoförmigen Abschnitts (16) als Punktkavitator ausgestaltet ist.

12. Vorrichtung (10) gemäß einem oder mehreren der Ansprüche 10 bis 11, **dadurch gekennzeichnet, dass** eine Geometrie des zumindest einen Kavitators (21, 23) veränderbar ist.

13. Vorrichtung (10) gemäß einem oder mehreren der vorhergehenden Ansprüche, **dadurch gekennzeichnet, dass** der Eintauchkörper (12) Flugstabilisatoren (40) aufweist.

14. Vorrichtung (10) gemäß einem oder mehreren der vorhergehenden Ansprüche, **dadurch gekennzeichnet, dass** der Eintauchkörper (12) zumindest ein Pendelruder (42.1, 42.2) umfasst.

15. Vorrichtung (10) gemäß einem oder mehreren der vorhergehenden Ansprüche, **dadurch gekennzeichnet, dass** an dem Eintauchkörper (12) mindestens ein Eintauchsporn (46) angeordnet ist.

16. Vorrichtung (10) gemäß einem oder mehreren der vorhergehenden Ansprüche, **dadurch gekennzeichnet, dass** die Vorrichtung (10) eine Abstandsmessvorrichtung (58) umfasst, mittels der zumindest eine Eintauchtiefe des Eintauchkörpers (12) in ein Gewässer (52) und/oder eine Wellenhöhe eines Gewässers (52) ermittelbar ist.

17. Vorrichtung (10) nach einem oder mehreren der vorhergehenden Ansprüche, **dadurch gekennzeichnet, dass** diese einen Airbag zur Vermeidung von Schäden bei einer Kollision mit Objekten in einem Gewässer umfasst.

18. Verfahren zur Aufnahme von Wasser in ein Luftfahrzeug umfassend die Schritte
- Bereitstellen einer Vorrichtung (10) gemäß einem oder mehreren der Ansprüche 1 bis 17,
- Verbinden der Vorrichtung (10) mit einem Wassertank in einem Luftfahrzeug,
- Absenken der Vorrichtung (10) in ein Gewässer (52) während eines Fluges des Luftfahrzeugs, so dass diese zumindest teilweise in das Gewässer (52) eingetaucht wird,
- Aufnahme von Wasser aus dem Gewässer (52) über Wassereinlassöffnungen (20.1, 20.2) in einem Eintauchkörper (12) der Vorrichtung (10).

19. Verfahren gemäß Anspruch 18, **dadurch gekennzeichnet, dass** die Vorrichtung (10) mit Luft beaufschlagt wird, so dass diese derart aus Luftauslassöffnungen (22.1, 22.2) strömt, so dass der in das Gewässer (52) eingetauchte Eintauchkörper (12) der Vorrichtung (10) zumindest teilweise von einer Gasblase umhüllt ist.

20. Verfahren gemäß einem oder mehreren der Ansprüche 18 und 19, **dadurch gekennzeichnet, dass** Luft aus Luftauslassöffnungen (22.1, 22.2) mittels eines Venturieffekts gesogen wird.

21. Verfahren gemäß einem oder mehreren der Ansprüche 18 bis 20, **dadurch gekennzeichnet, dass** mittels Luft eine ventilierte Kavitation induziert wird.

22. Verfahren gemäß einem oder mehreren der Ansprüche 18 bis 21, **dadurch gekennzeichnet, dass** mittels zumindest eines Kavitators (21, 23) eine Superkavitation an dem ins Gewässer (52) eingetauchten Eintauchkörper (12) erzeugt wird.

23. Verfahren gemäß einem oder mehreren der Ansprüche 18 bis 19, **dadurch gekennzeichnet, dass** bei dem zumindest teilweisen Eintauchen des Eintauchkörpers (12) zuerst der ausgefahrene Eintauchsporn (46) eingetaucht wird.

24. Verfahren gemäß einem oder mehreren der Ansprüche 18 bis 23, **dadurch gekennzeichnet, dass** vor dem zumindest teilweisen Eintauchen des Eintauchkörpers (12) dieser in einer Flugphase mittels der ausgeklappten Flugstabilisatoren (40) stabilisiert wird.

25. Verfahren gemäß einem oder mehreren der Ansprüche 18 bis 24, **dadurch gekennzeichnet, dass** nach dem zumindest teilweisen Eintauchen des Eintauchkörpers zumindest ein Pendelruder (42.1, 42.2) in eine Einsatzstellung gebracht wird.

26. Verwendung einer Vorrichtung gemäß einem oder mehreren der Ansprüche 1 bis 17 zur Beladung eines Luftfahrzeuges mit Wasser.

27. Einrüstsatz für ein Luftfahrzeug umfassend eine Vorrichtung gemäß einem oder mehreren der Ansprüche 1 bis 17 und zumindest einen Wassertank.

28. Luftfahrzeug umfassend eine Vorrichtung nach einem oder mehreren der Ansprüche 1 bis 17 und zumindest einen Wassertank.

29. Luftfahrzeug gemäß Anspruch 28, **dadurch gekennzeichnet, dass** dieses eine ausfahrbare Vorrichtung zur Ausbringung und Einbringung zumindest eines Eintauchkörpers (12) der Vorrichtung (10) während eines Fluges des Luftfahrzeugs umfasst.

## Claims

1. Device (10) for receiving water in an aircraft during flight, comprising at least one immersion body (12) suitable for immersion in a body of water, with at least one water inlet opening (20.1, 20.2) and with at least one means for generating at least one gas bubble (21, 22, 23) for at least partial enclosing the immersion body (12).

2. Device (10) according to claim 1, **characterized in that** the at least one means for generating a gas bubble on the immersion body (12) comprises at least one air outlet opening (22.1, 22.2).

3. Device (10) according to one or more of the preceding claims, **characterized in that** the immersion body (12) comprises a blade portion (14), wherein the blade portion (14) has a longitudinal extension (15) with an upper end (18) and a lower end (19).

4. Device (10) according to one or more of the preceding claims, **characterized in that** the immersion body (12) comprises at least one torpedo-shaped section (16).

5. Device (10) according to one or more of claims 2 to 4, **characterized in that** the at least one air outlet opening (22.1, 22.2) is arranged downstream of the at least one water inlet opening (20.1, 20.2) in a direction of movement (50) of the device (10).

6. Device (10) according to one or more of claims 2 to 5, **characterized in that** a plurality of water inlet openings (20.1, 20.2) and air outlet openings (22.1, 22.2) are provided.

7. Device (10) according to one or more of claims 2 to 6, **characterized in that** the immersion body (12) comprises a prow (30), wherein the at least one water inlet opening (20.1, 20.2) and the at least one air outlet opening (22.1, 22.2) are arranged at the prow (30).

8. Device (10) according to claim7 , **characterized in that** a plurality of air outlet openings (22.1, 22.2) are arranged along the prow (30) in the longitudinal extension (15) of the device (10).

9. Device (10) according to one or more of claims 2 to 8, **characterized in that** at least one air outlet opening (22.1, 22.2) is developed as a Venturi nozzle.

10. Device (10) according to one or more of the preceding claims, **characterized in that** the at least one means for generating a gas bubble at least partially around the immersion body (12) comprises at least one cavitator (21, 23).

11. Device (10) according to claim10 , **characterized in that** at least one cavitator (21) on the blade portion (14) is developed as a line cavitator and/or at least one cavitator (23) of the torpedo-shaped section (16) is developed as a point cavitator.

12. Device (10) according to one or more of claims 10 to 11, **characterized in that** a geometry of the at least one cavitator (21, 23) is modifiable.

13. Device (10) according to one or more of the preceding claims, **characterized in that** the immersion body (12) comprises flight stabilizers (40).

14. Device (10) according to one or more of the preceding claims, **characterized in that** the immersion body (12) comprises at least one pendulum rudder (42.1, 42.2).

15. Device (10) according to one or more of the preceding claims, **characterized in that** at least one immersion spur (46) is arranged on the immersion body (12).

16. Device (10) according to one or more of the preceding claims, **characterized in that** the device (10) comprises a distance measuring device (58), by means of which at least an immersion depth of the immersion body (12) in a body of water (52) and/or a wave height of a body of water (52) can be determined.

17. Device (10) according to one or more of the preceding claims, **characterized in that** it comprises an airbag for preventing damage in the event of a collision with objects in a body of water.

18. Method for receiving water in an aircraft comprising the steps of
- Providing a device (10) according to one or more of claims 1 to 17,
- Connecting the device (10) to a water tank in an aircraft,
- Lowering the device (10) into a body of water (52) during a flight of the aircraft so that it is at least partially immersed in the body of water (52),
- Receiving water from the body of water (52) via water inlet openings (20.1, 20.2) in an immersion body (12) of the device (10).

19. Method according to claim 18, **characterized in that** that the device (10) is supplied with air so that it flows out of air outlet openings (22.1, 22.2) in such a way that the immersion body (12) of the device (10) immersed in the body of water (52) is at least partially enclosed by a gas bubble.

20. Method according to one or more of the claims 18 and 19, **characterized in that** air is drawn from air outlet openings (22.1, 22.2) by means of a Venturi effect.

21. Method according to one or more of the claims 18 to 20, **characterized in that** a ventilated cavitation is induced by means of air.

22. Method according to one or more of the claims 18 to 21, **characterized in that** supercavitation is generated on the immersion body (12) immersed in the body of water (52) by means of at least one cavitator (21, 23).

23. Method according to one or more of the claims 18 to 19, **characterized in that** during the at least partial immersion of the immersion body (12), the projecting immersion spur (46) is immersed first.

24. Method according to one or more of claims 18 to 23, **characterized in that**, before the immersion of at least part of the immersion body (12), the latter is stabilized in a flight phase by means of the unfolded flight stabilizers (40).

25. Method according to one or more of the claims 18 to 24, **characterized in that** after the at least partial immersion of the immersion body, at least one pendulum rudder (42.1, 42.2) is brought into a deployed position.

26. Use of a device according to one or more of claims 1 to 17 for loading an aircraft with water.

27. A kit for an aircraft comprising a device according to one or more of claims 1 to 17 and at least one water tank.

28. An aircraft comprising a device according to one or more of claims 1 to 17 and at least one water tank.

29. Aircraft according to claim 28, **characterized in that** it comprises an extendable device for deploying and retracting at least one immersion body (12) of the device (10) during a flight of the aircraft.

## Revendications

1. Dispositif (10) destiné à recevoir de l'eau dans un aéronef en vol, comprenant au moins un corps immergé (12) adapté pour être immergé dans une eau, avec au moins une ouverture d'entrée d'eau (20.1, 20.2) et avec au moins un moyen pour générer au moins une bulle de gaz (21, 22, 23) pour envelopper au moins partiellement le corps immergé (12).

2. Dispositif (10) selon la revendication 1, **caractérisé en ce que** ledit au moins un moyen pour générer une bulle de gaz sur le corps immergé (12) comprend au moins une ouverture de sortie d'air (22.1, 22.2).

3. Dispositif (10) selon l'une ou plusieurs des revendications précédentes, **caractérisé en ce que** le corps immergé (12) comprend une partie de lame (14), la partie de lame (14) ayant une extension longitudinale (15) avec une extrémité supérieure (18) et une extrémité inférieure (19).

4. Dispositif (10) selon l'une ou plusieurs des revendications précédentes, **caractérisé en ce que** le corps immergé (12) comprend au moins une portion (16) en forme de torpille.

5. Dispositif (10) selon une ou plusieurs des revendications 2 à 4, **caractérisé en ce que** l'au moins une ouverture de sortie d'air (22.1, 22.2) est disposée derrière l'au moins une ouverture d'entrée d'eau (20.1, 20.2) dans une direction de déplacement (50) du dispositif (10).

6. Dispositif (10) selon une ou plusieurs des revendications 2 à 5, **caractérisé en ce qu'**une pluralité d'ouvertures d'entrée d'eau (20.1, 20.2) et d'ouvertures de sortie d'air (22.1, 22.2) sont prévues.

7. Dispositif (10) selon une ou plusieurs des revendications 2 à 6, **caractérisé en ce que** le corps immergé (12) comprend une proue (30), l'au moins une ouverture d'entrée d'eau (20.1, 20.2) et l'au moins une ouverture de sortie d'air (22.1, 22.2) étant disposées sur la proue (30).

8. Dispositif (10) selon la revendication 7, **caractérisé en ce qu'**une pluralité d'ouvertures de sortie d'air (22.1, 22.2) sont disposées le long de la proue (30) dans le sens de l'extension longitudinale (15) du dispositif (10).

9. Dispositif (10) selon une ou plusieurs des revendications 2 à 8, **caractérisé en ce qu'**au moins une ouverture de sortie d'air (22.1, 22.2) est conçue comme une buse à venturi.

10. Dispositif (10) selon l'une ou plusieurs des revendications précédentes, **caractérisé en ce que** ledit au moins un moyen pour générer une bulle de gaz comprend au moins partiellement autour dudit corps immergé (12) au moins un cavitateur (21, 23).

11. Dispositif (10) selon la revendication 10, **caractérisé en ce qu'**au moins un cavitateur (21) sur la partie de lame (14) est conçu comme un cavitateur linéaire et/ou au moins un cavitateur (23) de la section en forme de torpille (16) est conçue comme un cavitateur ponctuel.

12. Dispositif (10) selon une ou plusieurs des revendications 10 à 11, **caractérisé en ce qu'**une géométrie dudit au moins un cavitateur (21, 23) est modifiable.

13. Dispositif (10) selon une ou plusieurs des revendications précédentes, **caractérisé en ce que** le corps immergé (12) comporte des stabilisateurs de vol (40).

14. Dispositif (10) selon une ou plusieurs des revendications précédentes, **caractérisé en ce que** le corps immergé (12) comprend au moins un safran pendulaire (42.1, 42.2).

15. Dispositif (10) selon une ou plusieurs des revendications précédentes, **caractérisé en ce qu'**au moins une béquille d'immersion (46) est disposée sur le corps immergé (12).

16. Dispositif (10) selon une ou plusieurs des revendications précédentes, **caractérisé en ce que** le dispositif (10) comprend un dispositif de mesure de distance (58) au moyen duquel au moins une profondeur d'immersion du corps immergé (12) dans une étendue d'eau (52) et/ou une hauteur de vague d'une étendue d'eau (52) peuvent être déterminées.

17. Dispositif (10) selon une ou plusieurs des revendications précédentes, **caractérisé en ce qu'**il comprend un airbag pour éviter les dommages en cas de collision avec des objets dans une étendue d'eau.

18. Procédé d'embarquement d'eau dans un aéronef, comprenant les étapes consistant à
- fournir un dispositif (10) selon une ou plusieurs des revendications 1 à 17,
- relier le dispositif (10) à un réservoir d'eau dans un aéronef,
- descendre le dispositif (10) dans une étendue d'eau (52) pendant un vol de l'aéronef de manière à ce qu'il soit au moins partiellement immergé dans l'étendue d'eau (52),
- recevoir l'eau provenant de l'étendue d'eau (52) par des ouvertures d'entrée d'eau (20.1, 20.2) dans un corps immergé (12) du dispositif (10).

19. Procédé selon la revendication 18, **caractérisé en ce que** le dispositif (10) est alimenté en air, de sorte que celui-ci s'écoule par des ouvertures de sortie d'air (22.1, 22.2) de telle sorte que le corps immergé (12) du dispositif (10), plongé dans l'étendue d'eau (52), est au moins partiellement enveloppé par une bulle de gaz.

20. Procédé selon une ou plusieurs des revendications 18 et 19, **caractérisé en ce que** de l'air est aspiré par des ouvertures de sortie d'air (22.1, 22.2) au moyen d'un effet Venturi.

21. Procédé selon une ou plusieurs des revendications 18 à 20, **caractérisé en ce qu'**une cavitation ventilée est induite au moyen d'air.

22. Procédé selon une ou plusieurs des revendications 18 à 21, **caractérisé en ce qu'**une supercavitation est générée au moyen d'au moins un cavitateur (21, 23) sur le corps immergé (12) plongé dans l'étendue d'eau (52).

23. Procédé selon l'une ou plusieurs des revendications 18 à 19, **caractérisé en ce que**, lors de l'immersion au moins partielle du corps d'immersion (12), la béquille d'immersion (46) déployé est d'abord immergé.

24. Procédé selon une ou plusieurs des revendications 18 à 23, **caractérisé en ce qu'**avant l'immersion au moins partielle du corps immergé (12), le corps immergé (12) est stabilisé dans une phase de vol au moyen des stabilisateurs de vol (40) déployés.

25. Procédé selon une ou plusieurs des revendications 18 à 24, **caractérisé en ce qu'**après l'immersion au moins partielle du corps immergé, au moins un safran pendulaire (42.1, 42.2) est amené dans une position de déploiement.

26. Utilisation d'un dispositif selon l'une ou plusieurs des revendications 1 à 17 pour le chargement en eau d'un aéronef.

27. Kit d'équipement pour aéronef comprenant un dispositif selon l'une ou plusieurs des revendications 1 à 17 et au moins un réservoir d'eau.

28. Aéronef comprenant un dispositif selon une ou plusieurs des revendications 1 à 17 et au moins un réservoir d'eau.

29. Aéronef selon la revendication 28, **caractérisé en ce qu'**il comprend un dispositif déployable de déploiement et de mise en place d'au moins un corps immergé (12) du dispositif (10) pendant un vol de l'aéronef.
